(19) Europäisches Patentamt
European Patent Office
Office européen des brevets

(11) Veröffentlichungsnummer: **0 345 731 B1**

(12) ## EUROPÄISCHE PATENTSCHRIFT

(45) Veröffentlichungstag der Patentschrift:
29.05.91 Patentblatt 91/22

(51) Int. Cl.⁵: **B60T 8/66**

(21) Anmeldenummer: **89110230.3**

(22) Anmeldetag: **06.06.89**

(54) **Verfahren zum Regeln des Bremsdruckes in einer blockiergeschützten Fahrzeugbremsanlage.**

(30) Priorität: 07.06.88 DE 3819424

(43) Veröffentlichungstag der Anmeldung:
13.12.89 Patentblatt 89/50

(45) Bekanntmachung des Hinweises auf die
Patenterteilung:
29.05.91 Patentblatt 91/22

(84) Benannte Vertragsstaaten:
DE ES FR GB IT SE

(56) Entgegenhaltungen:
DE-A- 2 414 698
DE-A- 2 951 754
DE-A- 3 731 483
GB-A- 2 136 901
GB-A- 2 176 557

(73) Patentinhaber: LUCAS INDUSTRIES public
limited company
Great King Street
Birmingham, B19 2XF West Midlands (GB)

(72) Erfinder: Braschel, Volker
Fliedergarten 57
W-5450 Neuwied (DE)

(74) Vertreter: von Hellfeld, Axel, Dipl.-Phys. Dr. et
al
Wuesthoff & Wuesthoff Patent- und
Rechtsanwälte Schweigerstrasse 2
W-8000 München 90 (DE)

## Beschreibung

Die Erfindung betrifft ein Verfahren zum Steuern des Bremsdruckes in einer blockiergeschützten Fahrzeugbremsanlage, bei dem die Drehgeschwindigkeiten der Fahrzeugräder gemessen werden und in Abhängigkeit von der Verzögerung und/oder dem Schlupf eines Rades bei Überschreiten von Verzögerungs- bzw. Schlupfschwellwerten der Bremsdruck an diesem Rad moduliert wird, wobei in Abhängigkeit von der Drehgeschwindigkeit des sich am schnellsten drehenden Rades eine Referenzgeschwindigkeit gebildet wird.

In der Technik des blockiergeschützten Bremsens (ABS) ist es bekannt, die Bremsregelung mit Hilfe einer sogenannte Fahrzeugreferenzgeschwindigkeit, oft auch einfach Referenzgeschwindigkeit genannt, durchzuführen, siehe hierzu insbesondere BOSCH TECHNISCHE BERICHTE, Bd. 7, 1980, Heft 2, S. 81 entsprechend Bosch Technological Reports, English special edition, February 1982, ISSN 0006-798 X.

Dem Fachmann der ABS-Technik ist bekannt, daß die sogenannte Fahrzeugreferenzgeschwindigkeit, welche der nicht direkt meßbaren Geschwindigkeit des Fahrzeuges möglichst nahekommen soll, zur Bestimmung des Schlupfes herangezogen wird, d.h. es wird die momentane Umfangsgeschwindigkeit eines Rades mit der Fahrzeugreferenzgeschwindigkeit verglichen und die Differenz ergibt den Schlupf des Rades, welcher sich zur Erzielung eines möglichst kurzen Bremsweges bei gleichzeitiger Lenkbarkeit des Fahrzeuges im optimalen Bereich der bekannten Reibbeiwert/Schlupf-Kurve befinden soll.

Die Fahrzeugreferenzgeschwindigkeit wird, wie dem Fachmann ebenfalls bekannt ist, anhand der Drehgeschwindigkeiten des sich am schnellsten drehenden Rades des Fahrzeuges bestimmt. Dabei ist häufig vorgesehen, die vier Räder des Fahrzeuges in zwei Gruppen von diagonal angeordneten Rädern aufzuteilen und die beiden Rädergruppen getrennt zu regeln, d.h. von den beiden diagonal angeordneten Rädern wird die Drehgeschwindigkeit des sich am schnellsten drehenden Rades zur Bildung der Fahrzeugreferenzgeschwindigkeit herangezogen.

Eine derartige Aufteilung in zwei Rädergruppen hat den Vorteil, daß bei Störungen in der Bildung einer Fahrzeugreferenzgeschwindigkeit wenigstens an den anderen Rädern, welche also zur anderen Fahrzeug-Diagonale gehören, eine genaue Ermittlung des Schlupfes der Räder möglich ist.

Die Verwendung des schnellsten Rades des Fahrzeuges (bzw. der Radgruppe des Fahrzeuges) hat bekanntlich den Vorteil, daß die Fahrzeugreferenzgeschwindigkeit häufig "gestützt" wird. Der Begriff "gestützt" bedeutet, daß die Fahrzeugreferenzgeschwindigkeit häufig, d.h. mit kurzen Zeitabständen, neu an die momentane Fahrzeugsituation durch erneute Messung und Auswertung angepaßt wird.

Dieser bekannte Stand der Technik ist allerdings in bestimmten Fahrsituationen mit Nachteilen behaftet.

Insbesondere bei Bremsungen in Kurven, insbesondere auch bei Ausweichmanövern, beschreibt das kurvenäußere Vorderrad des Fahrzeuges einen größeren Radius als die anderen Räder und erzeugt deshalb die höchste Geschwindigkeit. Mit Hilfe dieses Rades wird also nach dem oben gesagten die Fahrzeugreferenzge- schwindigkeit gebildet. Wird in einer solchen Situation gebremst, so sollte das kurvenäußere Vorderrad bei Straßenverhältnissen mit gutem Reibbeiwert zur Erzielung eines kurzen Bremsweges aber auch hier möglichst schnell und dauerhaft einen Schlupf erreichen, der im optimalen Bereich der Reibbeiwert-Schlupf-Kurve liegt. Dieser optimale Bereich der Reibbeiwert-Schlupf-Kurve liegt bei einer Kurvenbremsung bei höheren Schlupfwerten als bei einer Bremsung in Geradeausrichtung (siehe obiges Literaturzitat, Seite 68, Bild 5). Das Rad sollte auch während der gesamten Bremsung möglichst ununterbrochen in diesem Bereich verbleiben. Nur so wird ein kurzer Bremsweg bei gleichzeitiger Lenkstabilität des Fahrzeuges erreicht.

Wird aber das am schnellsten drehende Rad zur Bildung der Fahrzeugreferenzgeschwindigkeit herangezogen, in der hier beschriebenen Situation also das kurvenäußere Vorderrad, und wird die Schlupfberechnung auf die genannte Fahrzeugreferenzgeschwindigkeit bezogen, so wird für dieses Rad wegen der relativ hohen Fahrzeugreferenzgeschwindigkeit, welche außerdem mit einer geringen zeitlichen Verzögerung vorliegt, ein relativ großer Schlupf berechnet und es überschreitet schnell vorgegebene Schlupf-Schwellwerte, so daß der Bremsdruck an diesem Rad wieder abgebaut wird. Es wird Bremsweg verschenkt. Ein längeres Verbleiben des Rades im erwünschten hohen Schlupfbereich ist also nur möglich, wenn die vom kurvenäußeren Vorderrad zunächst (d.h. vor Beginn der Regelung des Bremsdruckes) hochgehaltene Fahrzeugreferenzgeschwindigkeit schnell kleiner wird (so daß der Schlupf dieses Rades ebenfalls kleiner wird und die Schwelle nicht überschreitet) und auch nicht durch ein anderes Rad auf einen zu hohen Wert gehalten bzw. gebracht wird. Bei einer ABS-Bremsung in einer Kurve ist nach Einleitung der Regelung das kurvenäußere Hinterrad (bei sogenannter "select low" Regelung) meist stabil und liefert die höchsten Drehgeschwindigkeiten. Damit wird die Fahrzeugreferenzgeschwindigkeit zu hoch gehalten, um eine gute Abbremsung des kurvenäußeren Vorderrades ermöglichen zu können.

Ein weiteres Problem entsteht bei herkömmlichen ABS-Regelungen dann, wenn ein Notrad verwendet wird, dessen Rollradius kleiner ist als der eines Normalrades. Die Winkelgeschwindigkeit eines solchen Notrades liegt deutlich über den Winkelgeschwindigkeiten der anderen Räder. Da die ABS-Regelanlage nicht erkennt, ob ein Normalrad oder ein Notrad montiert ist, würde die Fahrzeugreferenzgeschwindigkeit vom Notrad (als dem am schnellsten drehenden Rad) bestimmt und die Schlupfberechnung erheblich verfälscht, d.h. der Prozessor der ABS-Regelanlage würde viel zu häufig und empfindlich auf Überschreitungen von Schlupf-Schwellwerten bei den anderen Rädern erkennen.

Zur Vermeidung der vorstehend beschriebenen Nachteile könnte man zumindest zeitweise relativ hohe Schlupfschwellen vorsehen, d.h. die Regelung bezüglich des Schlupfes relativ "träge" einstellen. Eine solche Erhöhung der Schlupf-Schwellwerte hat aber den Nachteil, daß, insbesondere auf glatter Fahrbahn, große sogenannte Regelabweichungen auftreten, d.h. das gebremste Rad wird relativ häufig in Schlupfbereiche gebracht, die im instabilen Bereich der Reibbeiwert/Schlupf-Kurve liegen, so daß Bremsweg verschenkt wird. Diese Lösung wäre also nicht optimal.

Weiterhin wäre es denkbar, zur Überwindung der oben erläuterten Nachteile, die schnellste Radumfangsgeschwindigkeit nicht zur Bildung der Fahrzeugreferenzgeschwindigkeit heranzuziehen. Hierdurch würden aber die oben erläuterten Vorteile der Auswahl des am schnellsten drehenden Rades verloren gehen.

Schließlich wäre es noch denkbar, mittels besonderer Einrichtungen die oben genannten Fahrsituationen als solche vorab zu erkennen und die Regelung dann entsprechend zu modifizieren. Eine derartige Lösung wäre aber sehr aufwendig und überdies sehr kompliziert, so daß auch die Sicherheit gefährdet wäre.

Der Erfindung liegt die Aufgabe zugrunde, das eingangs genannte Verfahren zum Regeln des Bremsdruckes in einer blockierge- schützten Fahrzeugbremsanlage derart weiterzubilden, daß bei einer Kurvenbremsung oder bei unterschiedlichen Rollradien der Räder mit einfachen Mitteln ein möglichst kurzer Bremsweg bei gleichzeitiger guter Lenkbarkeit des Fahrzeuges erreicht wird.

Erfindungsgemäß wird diese Aufgabe dadurch gelöst, daß neben der oben erwähnten Fahrzeugreferenzgeschwindigkeit für jedes Rad eine Radreferenzgeschwindigkeit zur Bemessung der Schlupfschwellwerte gebildet wird, daß für jedes Rad die Differenz ($\Delta_{ref}$) zwischen der Fahrzeugreferenzgeschwindigkeit ($v_{refF}$) und der Radreferenzgeschwindigkeit ($v_{refR}$) ermittelt wird und daß in Abhängigkeit von dieser Differenz die Länge einer Bremsdruckhalte- oder -abbauphase eingestellt wird.

Erfindungsgemäß wird also die Länge einer Druckabbauphase, welche in herkömmlicher Weise durch Überschreiten vorgegebener Schwellwerte, bezogen auf die Radreferenzgeschwindigkeit, eingeleitet wird, in Abhängigkeit von dem Unterschied zwischen der Fahrzeugreferenzgeschwindigkeit und der Radreferenzgeschwindigkeit für das betreffende Rad eingestellt und zwar um so länger, je größer dieser Unterschied ist.

Sind die Fahrzeugreferenzgeschwindigkeit und die Radreferenzgeschwindigkeit gleich, d.h $\Delta_{ref} = 0$, so ergibt sich die Länge einer Bremsdruckhalte- oder Abbauphase in herkömmlicher Weise durch das Überschreiten vorgegebener Schwellwerte. Ist jedoch $\Delta_{ref}$ verschieden von 0, so wird die Bremsdruckhalte- oder Abbauphase verlängert, und zwar innerhalb vorgegebener Grenzwerte umso mehr, je größer $\Delta_{ref}$ ist.

Die Fahrzeugreferenzgeschwindigkeit und die Radreferenzgeschwindigkeit können als solche in herkömmlicher Weise gebildet werden, wie oben erläutert.

Bevorzugt wird die Radreferenzgeschwindigkeit bei Einleitung einer Regelung an dem betreffenden Rad so gebildet, daß sich die Steigung der Radreferenzgeschwindigkeit aus einem Festwert von z.B. 0,6 g und einem von der Drehverzögerung des Rades abhängigen Anteil ergibt, der zur Steigung addiert oder subtrahiert werden kann.

Die Fahrzeugreferenzgeschwindigkeit wird durch das am schnellsten drehende Rad bestimmt, also durch die schnellste Rad-Referenzgeschwindigkeit.

Ansonsten sind alle Einrichtungen der ABS-Anlage dem Fachmann bekannt. Die Erfindung kann durch eine entsprechende Programmierung des Rechners der Anlage realisiert werden.

Die erfindungsgemäß vorgesehene Verzögerung des Druckaufbausignales in Abhängigkeit von der Differenz zwischen der Fahrzeugreferenzgeschwindigkeit und der betreffenden Radreferenzgeschwindigkeit erfolgt bevorzugt proportional, d.h. die Zeitspanne der Verzögerung des Druckaufbausignales (im Vergleich zu einer herkömmlichen Regelung, bei der das Druckaufbausignal bei gegebenen Schwellwertüberschreitungen einsetzt) wächst linear mit der Differenz zwischen der Fahrzeugreferenzgeschwindigkeit und der Radreferenzgeschwindigkeit. Der Proportionalitätsfaktor kann experimentell ermittelt werden. Bevorzugt wird ein Maximalwert für die Verzögerung des Druckaufbausignals vorgegeben.

Die erfindungsgemäße Lösung bringt eine Reihe von Vorteilen. Bei einem Kreisausfall liegt regelmäßig die Fahrzeugreferenzgeschwindigkeit zu hoch. Mit dem erfindungsgemäßen Verfahren werden aber nicht alle Räder unterbremst.

Weiterhin zeichnete sich das erfindungsgemäße Verfahren durch eine erhöhte Resistenz gegen Störungen auf. Bei einer Vielzahl von denkbaren Störungen einer ABS-Regelanlage wird nicht fälschlicherweise auf Schlupf an den Rädern erkannt.

Schließlich leistet das erfindungsgemäße Verfahren auch bei Bremsung in einer Kurve bzw. einem Ausweichmanöver während einer Bremsung sowie Montage eines Notrades für jedes einzelne Rad eine optimale Regelung des Bremsdruckes. Die Schlupf-Schwellwerte können relativ empfindlich eingestellt werden.

Das erfindungsgemäße Verfahren läßt sich auch auf die sogenannte ASR übertragen, d.h. auf die Verhinderung eines Durchdrehens der Räder bei zu großen Beschleunigungswerten.

Aus der DE-A 21 01 237 ist es bekannt, ein sogenanntes "fiktives Geschwindigkeitssignal" zu bilden, das zur tatsächlichen Fahrzeuggeschwindigkeit parallel läuft und von dieser um einen Wert abweicht, der gleich dem Schlupf zum Zeitpunkt des Lösens der Bremse ist. Diese Druckschrift lehrt nicht, für jedes Rad eine Differenz zwischen der Fahrzeugreferenzgeschwindigkeit und der Radreferenzgeschwindigkeit zu ermitteln und in Abhängigkeit von dieser Differenz die Länge einer Bremsdruckhalte- oder Bremsdruckabbauphase einzustellen.

Aus der DE-A 29 51 754 ist es bekannt, für einzelne Räder des Fahrzeuges eine Radreferenzgeschwindigkeit zu bilden, welche die Fahrzeugreferenzgeschwindigkeit beeinflußt. Eine Steuerung der Länge der Bremsdruckhaltephase oder Bremsdruckabbauphase in Abhängigkeit von einer ständig ermittelten Differenz zwischen der Radreferenzgeschwindigkeit und der Fahrzeugreferenzgeschwindigkeit wird aber nicht gelehrt.

Aus der DE-A 19 37 123 ist es bekannt, die Drehzahlen der einzelnen Räder des Fahrzeuges untereinander zu vergleichen und die Drehzahl des am schnellsten drehenden Rades für die Regelung heranzuziehen.

Nachfolgend wird ein Ausgangsbeispiel der Erfindung anhand der Zeichnung näher erläutert. Es zeigt:

Fig. 1 über einer gemeinsamen Zeitskala den Verlauf der charakteristischen Geschwindigkeiten der ABS-Regelung, eines Druckabbausignales und eines Druckaufbausignales zur Steuerung von Ventilen für den Bremsdruck-Abbau bzw. Bremsdruck-Aufbau ;

Fig. 2 ein Blockschaltbild einer Schaltung zum Durchführen einer erfindungsgemäßen Bremsregelung.

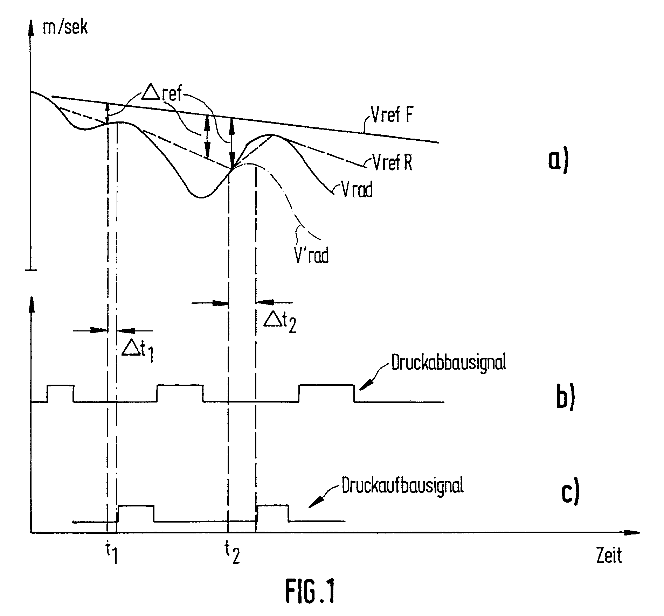

Fig. 1a zeigt den Verlauf der Fahrzeugreferenzgeschwindigkeit $V_{refF}$ über der Zeit. Die Fahrzeugreferenzgeschwindigkeit $V_{refF}$ wird durch die Drehgeschwindigkeit des sich am schnellsten drehenden Rades des Fahrzeuges (oder, wie oben erläutert, durch die Drehgeschwindigkeit des sich am schnellsten drehenden Rades einer Rädergruppe, z.B. diagonal angeordneter Räder) bestimmt. Dies ist dem Fachmann bekannt.

Weiterhin ist in Fig. 1a die Umfangsgeschwindigkeit $V_{rad}$ eines einzelnen gebremsten Rades aufgetragen, und zwar mit durchgezogener Linie für einen typischen erfindungsgemäßen Verlauf einer Bremsregelung, während der Verlauf der Rad-Drehgeschwindigkeit für eine herkömmliche Regelung strich-punktiert dargestellt und mit $V'_{rad}$ bezeichnet ist.

Weiterhin ist in Fig. 1a die Radreferenzgeschwindigkeit $V_{refR}$ für das einzelne Rad mit gestrichelter Linie eingetragen. Die Radreferenzgeschwindigkeit $V_{refR}$ ergibt sich im wesentlichen in herkömmlicher Weise.

Die Rad-Referenzgeschwindigkeit kann derart ermittelt werden, daß Geschwindigkeitssignale (Sensorsignale) des Rades gemessen (gezählt) werden und als Augenblickswert der Radgeschwindigkeit digitalisiert und abgespeichert werden. Der so ermittelte, momentane Radgeschwindigkeitswert wird mit dem voher ermittelten und abgespeicherten Wert verglichen. Es ist auch bekannt, zur Bildung der Rad-Referenzgeschwindigkeit mehrere aufeinanderfolgend gemessene Werte der Radgeschwindigkeit aufzuaddieren, um daraus eine mittlere Radgeschwindigkeit zu ermitteln und abzuspeichern.

Weicht nun die zuletzt ermittelte momentane Radgeschwindigkeit nicht um einen bestimmten Wert $\Delta v$, welcher laufend ermittelt wird, von dem Wert der abgespeicherten Radgeschwindigkeit ab, so wird der zuletzt gemessene Wert der momentanen Radgeschwindigkeit erneut abgespeichert bzw. bei der vorstehend beschriebenen Mittelwertbildung berücksichtigt. Der so gewonnene Wert bildet die Rad-Referenzgeschwindigkeit.

Weicht hingegen der momentan zuletzt gemessene Radgeschwindigkeitswert um mehr als den gegebenen Wert $\Delta v$ vom abgespeicherten ab, so wird daraus geschlossen, daß das betreffende Rad instabil geworden ist und es wird ein Druckabbau oder eine Druckkonstanthaltung eingeleitet.

Ist auf diese Weise eine Instabilität des Rades erkannt worden, so kann der nun gemessene Radgeschwindigkeitswert nicht mehr für die Bildung der Rad-Referenzgeschwindigkeit herangezogen werden, da die Rad-Referenzgeschwindigkeit der tatsächlichen Fahrzeuggeschwindigkeit möglichst weitgehend entsprechen soll. Deshalb wird nun die Rad-Referenzgeschwindigkeit mit plausiblen Daten "simuliert". Dies ist als solches bekannt. Beispielweise wird beim Erkennen einer Instabilität des Rades aufgrund des Überschreitens von Schwellwerten ($\Delta v$) die Rad-Referenzgeschwindigkeit mit einem Gradienten von 0,6 g gesenkt. Dieser vorgegebene Wert des Gradienten kann innerhalb physikalisch plausibler Grenzen (typischerweise zwischen 1,1 g und 0,1 g) variiert werden. Auch dies ist dem Fachmann bekannt. Zum Beispiel kann bei einer hohen Raddrehverzögerung während der Anbremsphase (erster Regelzyklus) auf eine schlüpfrige Fahrbahn geschlossen werden und entsprechend wird der zunächst vorgegebene Gradient von 0,6 g um einen Anteil von z.B 0,3 reduziert, so daß sich nun ein Gradient von 0.3 g für die Rad-Referenzgeschwindigkeit ergibt.

Wird hingegen in der Anbremsphase (erster Regelzyklus) eine niedrige Raddrehverzögerung gemessen, so wird auf eine entsprechend gute Fahrbahn geschlossen und der Gradient durch Addition vergrößert, z.B. kann 0,5 g zu 0,6 g addiert werden, um einen Gradienten von 1,1 g für die Referenzgeschwindigkeit zu erhalten.

Weiterhin ist es zur Bildung der Referenzgeschwindigkeit auch bekannt, nach dem ersten Regelzyklus aus den mittleren Raddrehverzögerungen eine Fahrzeugverzögerung zu errechnen, mit der ebenfalls der Gradient korrigiert werden kann.

Auch ist es möglich, den Gradienten für die simulierte Radreferenzgeschwindigkeit mit externen Mitteln zu bestimmen. Unter externen Mitteln sind hier solche Einrichtungen zu verstehen, die unabhängig von den gemessenen Rad-Drehgeschwindigkeiten sind. Zum Beispiel kann mit einem Masse/Feder-System auf eine Fahrzeugverzögerung geschlossen werden (eine träge Masse drückt eine Feder entsprechend der Fahrzeugverzögerung). Das derart ermittelte Verzögerungssignal kann ebenfalls die Rad-Referenzgeschwindigkeit beeinflussen.

In den Fig. 1b und 1c sind das Druckabbausignal zum Steuern eines Druckabbauventils zum Abbauen des Bremsdruckes an dem betreffenden Rad bzw. das Druckaufbausignal zum Öffnen eines Druckaufbauventils, mit der Aufbau des Bremsdruckes durchgeführt wird, aufgetragen.

Gemäß Fig. 1a wird zu jedem Zeitpunkt die Differenz $\Delta_{ref}$ zwischen der momentanen Radreferenzgeschwindigkeit $V_{refR}$ und der Fahrzeugreferenzgeschwindigkeit $V_{refF}$ gebildet und verfolgt. Zum Zeitpunkt $t_1$ ist die Differenz $\Delta_{ref}$ relativ klein. Die Zeitspanne $\Delta t_1$, um welche der Druckaufbau am Ende einer Druck-Haltephase oder einer Druckabbauphase verzögert wird, ist deshalb relativ kurz. Zum Zeitpunkt $t_2$ ist die Differenz $\Delta_{ref}$ relativ groß. Entsprechend ist die Zeitspanne $\Delta t_2$, um welche das Druckaufbausignal (Fig. 1c) verzögert wird, relativ länger. Die Umfangsgeschwindigkeit $V_{rad}$ des gebremsten Rades kann sich deshalb besser an die Fahrzeugreferenzgeschwindigkeit $V_{refF}$ an passen. Würde das Druckaufbausignal nicht um die Zeitspanne $\Delta t_2$ verzögert, so würde der Aufbau des Bremsdruckes früher erfolgen und die Umfangsgeschwindigkeit der ungünstigeren Kurve $V'_{rad}$ folgen.

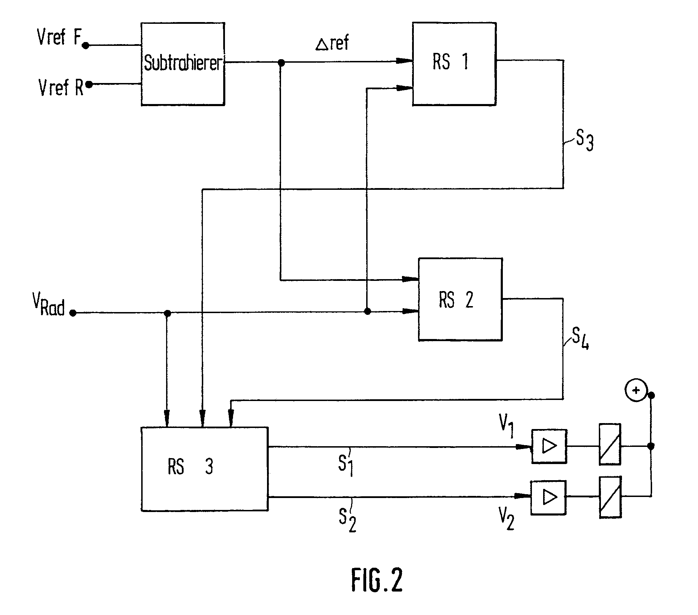

Fig. 2 zeigt ein Blockdiagramm einer Rechenschaltung, in welcher der vorstehend beschriebene Regelalgorithmus durchgeführt wird. In der Rechenschaltung RS₃ werden die wesentlichen Steuersignale für das Halten und den Abbau bzw. den Aufbau des Bremsdruckes erzeugt. Am Ausgang der Rechenschaltung RES 3 erscheinen die Steuersignale $S_1$ für das Druckhalten und $S_2$ für den Druckaufbau. Über Leistungsverstärker $V_1$ und $V_2$ werden Stellglieder für die Ventile betätigt.

Gemäß Fig. 2 werden die Fahrzeugreferenzgeschwindigkeit $V_{refF}$ und die Radreferenzgeschwindigkeit $V_{refR}$ in einen Substrahierer gegeben um die Differenz $\Delta_{ref}$ zu bilden, welche in die Rechenschaltungen RS₁ und RS₂ gegeben wird. In der Rechenschaltung RS₁ wird für jede Geschwindigkeitsdifferenz $\Delta_{ref}$ eine Beschleunigungsschwelle vorgegeben. Wenn die Wiederbeschleunigung des Rades kleiner ist als die für die gegebene Geschwindigkeitsdifferenz vorgegebene Beschleunigungsschwelle, erzeugt die Rechenschaltung RS₁ ein Signal $S_3$ für die Rechenschaltung RS₃, gemäß dem der Druckabbau verlängert wird.

In der Rechenschaltung RS₂ wird ebenfalls in Abhängigkeit von der momentan vorliegenden Geschwindigkeitsdifferenz $\Delta_{ref}$ diejenige Zeitspanne ermittelt, um welche der Beginn des Druckaufbaus gemäß den Zeitspannen $\Delta t_1$ bzw. $\Delta t_2$ gemäß Fig. 1 verzögert wird. Das entsprechende Signal $S_4$ wird in der Rechenschaltung RS₃ zur Steuerung der Ventile entsprechend verarbeitet.

## Ansprüche

1. Verfahren zum Steuern des Bremsdruckes in einer blockiergeschützten Fahrzeugbremsanlage, bei dem die Drehgeschwindigkeiten der Fahrzeugräder gemessen werden und in Abhängigkeit von der Verzögerung und/oder dem Schlupf eines Rades bei Überschreiten von Verzögerungs- bzw. Schlupfschwellwerten der Bremsdruck an diesem Rad moduliert wird, wobei in Abhängigkeit von der Drehgeschwindigkeit des sich am schnellsten drehenden Rades eine Fahrzeugreferenzgeschwindigkeit gebildet wird, und für jedes Rad des Fahrzeuges eine Radreferenzgeschwindigkeit ($V_{refR}$) gebildet wird, dadurch **gekennzeichnet**, daß für jedes Rad die Differenz ($\Delta_{ref}$) zwischen der Fahrzeugreferenzgeschwindigkeit ($V_{refF}$) und der Radreferenzgeschwindigkeit ($V_{refR}$) ermittelt wird und daß in Abhängigkeit von dieser Differenz die Länge einer Bremsdruckhalte- oder -Abbauphase eingestellt wird.

## Claims

1. Method of controlling the brake pressure in an antilock vehicle brake system in which the rotational velocities of the vehicle wheels are measured and in dependence upon the retardation and/or the slip of a wheel on exceeding retardation or slip threshold values the brake pressure at said wheel is modulated, a vehicle reference velocity being formed in dependence upon the rotational velocity of the fastest rotating wheel, and for each wheel of the vehicle a reference velocity ($V_{refR}$) is formed,
characterized in
that for each wheel the difference ($\Delta_{ref}$) between the vehicle reference velocity ($V_{refF}$) and the wheel reference velocity ($V_{refR}$) is determined and that in dependence upon said difference the length of a brake pressure maintaining or diminishing phase is adjusted.

**Revendications**

1. Procédé de commande de la pression de freinage dans une installation de freinage de véhicule à système antiblocage, selon lequel on mesure les vitesses de rotation des roues du véhicule, et on module, en fonction de la décélération et/ou du glissement d'une roue, la pression de freinage sur cette roue en cas de dépassement de valeurs de seuil de décélération ou de glissement, une vitesse de référence du véhicule étant formée en fonction de la vitesse de rotation de la roue qui tourne le plus vite, et une vitesse de référence de roue ($V_{refR}$) étant formée pour chaque roue du véhicule,
**caractérisé** en ce qu'on détermine pour chaque roue la différence ($\Delta_{ref}$) entre la vitesse de référence du véhicule ($V_{refF}$) et la vitesse de référence de la roue ($V_{refR}$), et en ce qu'on règle la longueur d'une phase de maintien ou de suppression de la pression de freinage en fonction de cette différence.

FIG.1

FIG.2